# EUROPÄISCHE PATENTSCHRIFT

(11) **EP 0 888 921 B1**
(45) Veröffentlichungstag und Bekanntmachung des Hinweises auf die Patenterteilung: **27.11.2002**
(21) Anmeldenummer: 98111919.1
(22) Anmeldetag: 26.06.1998
(51) Int. Cl.: B60K 41/06, F16H 59/74

(54) **Steuerung für den Antriebsstrang eines Kraftfahrzeugs**
Control for the drive unit of a motor vehicle
Commande de l'ensemble de propulsion d'un véhicule à moteur

(30) Priorität: 01.07.1997 DE 19727993
(43) Veröffentlichungstag der Anmeldung: 07.01.1999
(73) Patentinhaber: SIEMENS AKTIENGESELLSCHAFT, 80333 München (DE)
(72) Erfinder: Achleitner, Erwin, Dr., 93083 Obertraubling (DE); Graf, Friedrich, 93049 Regensburg (DE)

(56) Entgegenhaltungen:
- EP-A- 0 598 917
- EP-A- 0 697 510
- DE-A- 3 830 938
- DE-A- 19 522 165
- US-A- 5 311 794

## Beschreibung

Die Erfindung betrifft eine Steuerung für den Antriebsstrang eines Kraftfahrzeugs (Antriebsstrangsteuerung) nach dem Oberbegriff von Anspruch 1. Eine derartige Steuerung ist aus der US-A-5 311 794 bekannt, bei der ein in der Brennstoffzufuhreinrichtung sitzendes Ventil dann ein Signal zur Getriebesteuerung übermittelt, um einen Schaltvorgang zu verhindern, wenn das Ventil von "geschlossen" zu "geöffnet" schaltet.

Weiterhin ist es bekannt, daß bei herkömmlichen Getriebe- und Motorsteuerungen durch Verändern des Zündwinkels eine Verringerung des Motordrehmoments mit dem Ziel bewirkt wird, den Schaltkomfort zu verbessern und die Beanspruchung des Getriebes zu verringern (DE 29 34 477 C3). Bei neu zu entwickelnden Motor- und Getriebesteuerungen steht die Notwendigkeit im Vordergrund, Schadstoffemissionen zu reduzieren. Dazu werden lokale Verbesserungen angestrebt, d. h. eine Verbesserung des Motorsystems einerseits und des Getriebesystems andererseits. Da sich beide Systeme aber gegenseitig beeinflussen, entstehen durch solche Verbesserungen Einschränkungen beim Betrieb des Kraftfahrzeugs.

Bei einem bekannten Kraftfahrzeug-Antriebsstrang hat der Zylinder eines Magerbetriebmotors mehrere Einlaßventile, von denen eines (swirl control valve) bei höherer Motorlast geöffnet und bei niedriger Last geschlossen ist (US 5,311,794) A). Das Luft-Kraftstoffverhältnis ist höher, wenn dieses Ventil geschlossen ist, als wenn es offen ist. Ein/Aus-Umschaltungen des Ventils werden der Getriebesteuerung mitgeteilt, die dann und für eine Zeitspanne nach dem Umschalten jeden Schaltvorgang des Getriebes unterbindet. Sonderbetriebszustände des Motors werden dabei nicht berücksichtigt.

Ein bekanntes Kraftfahrzeug weist einen Motor mit einem Abgaskatalysator auf, dessen Abgasreinigungsgrad mit zunehmender Alterung abnimmt (DE 43 32 456 A1). Das Automatikgetriebe dieses Kraftfahrzeugs weist zumindest ein Economy- und ein Sport-Schaltprogramm auf, und es ist mit einer Einrichtung versehen, durch die das Getriebe zu Beginn der Warmlaufphase des Motors zur schnelleren Aufheizung des Katalysators automatisch in das Sportprogramm umgeschaltet wird. Eine automatische Rückschaltung des Getriebes in das Economy-Programm erfolgt nach einer Einschaltzeit des Sportprogramms, die mit zunehmender Gesamtbetriebsdauer oder Gesamtfahrstrecke länger dauert.

Ein Kraftfahrzeug-Antriebsstrang mit einem Dieselmotor und einem Getriebe weist eine Kraftstoffsteuerung auf, die abhängig von der Leistungsanforderung durch den Fahrer ist. Mehrere Kennfelder enthalten empirisch ermittelte Daten über Abgasbestandteile und Kraftstoffverbrauch (EP 0 474 401 A1). Die Getriebesteuerung ermittelt anhand der Fahrzeuggeschwindigkeit und der Leistungsanforderung und durch Auswerten der Kennfelder diejenige unter den Übersetzungsstufen, die für den zulässigen Motorbetriebsbereich möglich sind, die "optimal" ist. Die optimale Übersetzung wird angezeigt. Die Optimierung erfolgt im Hinblick auf einen geringen Kraftstoffverbrauch und auf das Abgasverhalten, wobei diese Kriterien gewichtet werden können. Es erfolgt eine adaptive Korrektur der Kennfelddaten für den gängigsten Motorbetriebsbereich.

Der Erfindung liegt die Aufgabe zugrunde, eine integrierte Antriebsstrangsteuerung zu schaffen, durch die nachteilige gegenseitige Beeinflussungen von Motor und Getriebe auch bei besonderen Betriebsmoden des Motors vermieden werden.

Diese Aufgabe wird erfindungsgemäß durch eine Antriebsstrangsteuerung gemäß Anspruch 1 gelöst. Zweckmäßige Weiterbildungen der Erfindungen sind in den Unteransprüchen niedergelegt.

Die Vorteile der Erfindung liegen insbesondere darin, daß sie eine integrierte Funktionssteuerung des gesamten Antriebsstrangs eines Kraftfahrzeugs ermöglicht. Schaltvorgänge im Getriebe beeinträchtigen den einwandfreien und umweltschonenden Betrieb des Motors nicht. Die Getriebesteuerung ist so ausgelegt, daß sie mit der Motorsteuerung sowohl bei Magerbetrieb (mit Schichtladung) wie auch bei Homogenbetrieb des Verbrennungsmotors einwandfrei mit diesem zusammenwirkt.

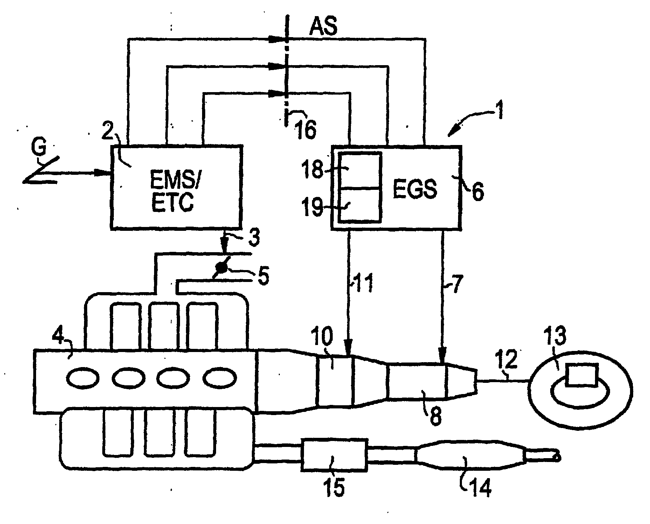

Ein Ausführungsbeispiel der Erfindung wird im folgenden anhand der Zeichnung erläutert.

Die einzige Figur zeigt in schematischer Darstellung eine erfindungsgemäße Antriebsstrangsteuerung für ein Kraftfahrzeug.

Eine Antriebsstrangsteuerung 1 enthält eine elektronische Motorsteuerung (abgekürzt EMS) 2, die über Signalleitungen 3 einen Motor 4 steuert. In der schematischen Zeichnung ist eine Drosselklappe 5 dargestellt, die von dem Fahrer über ein Gas- oder Fahrpedal G und gegebenenfalls über eine an sich bekannte und deshalb nicht weiter dargestellte elektromotorische Leistungssteuerung (auch als E-Gas bezeichnet) betätigt wird. Die Motorsteuerung 2 steuert darüber hinaus den Zündzeitpunkt des Motors. Die Abkürzung ETC in der Zeichnung deutet an, daß sie auch die Funktion einer elektronischen Antriebsschlupfsteuerung ausüben kann.

Eine elektronische Getriebesteuerung (EGS) 6 steuert über eine Signalleitung 7 ein automatisches Getriebe 8, das als vollautomatisches Getriebe auf der Grundlage von Planetenradsätzen oder auch als automatisiertes Handschaltgetriebe ausgebildet sein kann. Ist das Getriebe mit einem Drehmomentwandler 10 mit Überbrückungskupplung versehen, so wird diese Überbrückungskupplung von der Getriebesteuerung 6 über eine Signalleitung 11 gesteuert.

Schematisch angedeutet sind in der Zeichnung eine Gelenkwelle 12, die die Ausgangswelle des Getriebes 8 mit einer angetriebenen Achse verbindet, die hier durch ein angetriebenes Rad 13 angedeutet ist. Eine Abgasanlage 14 mit einem Katalysator 15 ist ebenfalls nur angedeutet.

Die Motorsteuerung 2 und die Getriebesteuerung 6 sind durch mehrere Signalleitungen, die auch als Datenbus ausgebildet sein könnenn und die eine Schnittstelle 16 bilden, miteinander verbunden. Ober die Schnittstelle 16 werden Daten über Betriebsgrößen des Kraftfahrzeugs und Steuersignale, insbesondere in Form von physikalischen Beschreibungsgrößen, ausgetauscht.

Die Getriebesteuerung 6 weist eines oder mehrere Schaltkennfelder 18 auf, anhand derer sie in Abhängigkeit von Fahrzustandsparametern, wie zum Beispiel die Motordrehzahl und die Fahrpedalstellung, die Schaltvorgänge des Getriebes in bekannter Weise steuert. Sie weist außerdem ein spezielles Schaltkennfeld 19 auf, dessen Funktion nachfolgend erläutert wird.

Verbrennungsmotoren werden üblicherweise, um einen möglichst geringen Kraftstoffverbrauch zu erreichen, mit einem Kraftstoff-Luft-Gemisch mit Luftüberschuß - zum Beispiel λ > 1,2 - betrieben. Der Luftüberschuß ist jedoch abträglich für die Wirkung des Katalysators 15, der am wirkungsvollsten mit einem Wert λ = arbeitet. Eine mögliche Lösung dieses Problems besteht darin, Katalysatoren zu verwenden, die die Stickoxide, die bei Magerbetrieb entstehen, in begrenzten Umfang binden. Ist die dafür vorhandene Kapazität erschöpft, muß eine Betriebsphase mit fettem Gemisch (λ < 1) folgen, die eine Konversion der gebundenen Stickoxide in ungiftigere Bestandteile ermöglicht, d. h. der Katalysator muß regeneriert werden.

Die erforderliche Katalysatorregenerierung hat häufige Zustandswechsel des Motors zwischen Mager- und Fettbetrieb zur Folge, und zwar alle 1 bis 3 Sekunden. In diesen Phasen des Zustandswechsels des Motors auftretende Zustandsänderungen des Getriebes, zum Beispiel in Form eines Gangwechsels, haben sich als sehr ungünstig für den Betrieb des Motors 4 erwiesen. Dies liegt insbesondere an der genau festgelegten Betriebsführung des Motors bei einem solchen Zustandswechsel, bei dem mehrere Betriebsgrößen des Motors, wie die Gemischbildung und die Einspritzmenge präzise gesteuert werden.

Ein Schaltvorgang im Getriebe stört einen solchen Zustandswechsel des Motors, da die Motordrehzahl und damit der Betriebspunkt des Motors sich dabei sprunghaft ändern. Hinzu kommen können Eingriffe der Getriebesteuerung in die Motorsteuerung zur Beeinflussung (Anhebung oder Absenkung) des Motordrehmoments, die ebenfalls die Gemischbildung und die Verbrennung beeinflussen.

Erfindungsgemäß wird deshalb die Getriebesteuerung 6 derart ausgelegt, daß, solange eine Katalysatorregenerierung stattfindet, Schaltungen im Getriebe 8 verschoben werden. Die Motorsteuerung 2 sendet dazu über die Schnittstelle 16 ein Zustandssignal AS, das der Getriebesteuerung 6 einen solchen besonderen Zustand des Motors signalisiert und das einen Schaltvorgang oder eine Übersetzungsänderung im Getriebe 8 verschiebt. Das Verschieben oder Verzögern des Schaltvorgangs wird durch Verwenden des speziellen Schaltkennfelds 19 oder auch nur durch Verschieben von Schaltkennlinien realisiert. Im Falle einer gemäß dem aktuellen Kennfeld vorgesehenen Hochschaltung, bewirkt das spezielle Schaltkennfeld eine Verschiebung in Richtung höherer Drehzahlen. Bei einer Rückschaltung bewirkt es eine Verschiebung in Richtung niedrigerer Drehzahlen.

Das spezielle Schaltkennfeld hat auch gegenüber einem einfachen Unterbinden eines Schaltvorgangs durch ein Sperrsignal den Vorteil, daß es eine Sicherung gegen ein Überdrehen des Motors mit einschließt. Durch das Zustandssignal AS werden der Getriebesteuerung 6 auch verschiedene weitere Zustandsänderungen des Motorbetriebs signalisiert, insbesondere die Wechsel zwischen Ladungsschichtungsbetrieb mit magerem Gemisch und Betrieb mit fettem Gemisch.

Ausgenommen von einer Verschiebung von Schaltungen oder Übersetzungsänderungen des Getriebes werden Fahrsituationen, in denen der Fahrer des Kraftfahrzeugs aus Sicherheitsgründen - zum Beispiel mit einem Kick-Down-Befehl - mehr Drehmoment vom Motor 4 anfordert. Ein höheres Drehmoment kann während der Katalysatorregenerierung ohne weiteres abgegeben werden, da der Motor während der Regenerierung homogen betrieben wird und das höhere Drehmoment durch eine Spätverstellung des Zündwinkels gesteuert wird.

Ein Warmlauf eines Direkteinspritzmotors erfolgt wie bei einem Motor mit Saugrohreinspritzung jeweils in einem niedrigen Gang. Der Motor wird auch hier homogen betrieben.

Bei einer Hochschaltung des Getriebes kann es vorkommen, daß der Motor den Betriebsbereich mit Ladungsschichtung verläßt, da das erforderliche Drehmoment für einen Ladungsschichtungsbetrieb bei niedriger Drehzahl zu hoch sein kann. Nähert sich der Motor 4 einer Bereichsgrenze des Ladungsschichtungbetriebs, wird dies der Getriebesteuerung 6 über die Schnittstelle 16 signalisiert und durch die Getriebesteuerung eine Schaltung im Getriebe verschobenen. Dies insbesondere deshalb, weil ein Umschalten sich ungünstig auf den Kraftstoffverbrauch auswirken würde.

## Patentansprüche

1. Steuerung (1) für den Antriebsstrang eines Kraftfahrzeugs mit einem Motor (4) und einem automatischen Getriebe (8), die versehen ist
- mit einer Motorsteuerung (2), durch die das Drehmoment des Motors (4) beeinflussende Größen gesteuert werden, und
- einer Getriebesteuerung (3), durch die die Schaltvorgänge des automatischen Getriebes (8) gesteuert werden, und
- mit einer die Motorsteuerung (2) und die Getriebesteuerung (3) miteinander verbindenden Schnittstelle (16), über die ein Zustandssignal (AS) übertragen wird,
**dadurch gekennzeichnet, daß**
- der Getriebesteuerung (6) eine stattfindende Katalysatorregenerierung mitgeteilt wird, wodurch
- in der Getriebesteuerung (6) ein Schaltvorgang des Getriebes (8) verschoben wird.

2. Steuerung nach Anspruch 1, **dadurch gekennzeichnet, daß** der Getriebesteuerung (6) durch das Zustandssignal (AS) ein Warmlaufen des Motors (4) mitgeteilt wird.

3. Antriebsstrangsteuerung nach Anspruch 1, **dadurch gekennzeichnet, daß** in der Getriebesteuerung (3) bei Empfang des Zustandssignals (AS) eine Hochschaltung in Richtung auf höhere Motordrehzahlen verschoben wird.

4. Antriebsstrangsteuerung nach Anspruch 1, **dadurch gekennzeichnet, daß** die Getriebesteuerung (3) ein spezielles Schaltkennfeld (19) aufweist, mit dem die verschobenen Schaltvorgänge gesteuert werden.

5. Antriebsstrangsteuerung nach Anspruch 1, **dadurch gekennzeichnet, daß** von der Motorsteuerung (2) an die Getriebesteuerung (6) ein Zustandssignal (AS) übermittelt wird, das einen Schichtladungsbetrieb des Motors (4) signalisiert.

6. Antriebsstrangsteuerung nach Anspruch 1 oder 2, **dadurch gekennzeichnet, daß** von der Motorsteuerung an (2) die Getriebesteuerung (6) ein Zustandssignal (AS) übermittelt wird, das einen Zustandswechsel des Motors (4) signalisiert.

## Claims

1. Control unit (1) for the drive train of a motor vehicle with an engine (4) and an automatic gearbox (8), which is provided with
- an engine control unit (2) by means of which the variables influencing the torque of the engine (4) are controlled, and
- a gearbox control unit (3) by means of which the gear-change operations taking place in the automatic gearbox (8) are controlled, and
- an interface (16) interconnecting the engine control unit (2) and the gearbox control unit (3), by way of which a status signal (AS) is transferred, **characterised in that**
- when regeneration of the catalytic converter takes place, this is notified to the gearbox control unit (6), as a result of which
- a gear-change operation in the gearbox (8) is postponed in the gearbox control unit (6).

2. Control unit according to Claim 1, **characterised in that** a warming-up of the engine (4) is notified to the gearbox control unit (6) by means of the status signal (AS).

3. Drive train control unit according to Claim 1, **characterised in that** an upward gear change leading to higher engine speeds is postponed in the gearbox control unit (3) upon receipt of the status signal (AS).

4. Drive train control unit according to Claim 1, **characterised in that** the gearbox control unit (3) has a special gear-change characteristic field (19) which serves to control the postponed gear-change operations.

5. Drive train control unit according to Claim 1, **characterised in that** a status signal (AS) which signals operation with stratified charging for the engine (4) is sent by the engine control unit (2) to the gearbox control unit (6).

6. Control unit according to Claim 1 or 2, **characterised in that** a status signal (AS) which signals a change of state for the engine (4) is sent by the engine control unit (2) to the gearbox control unit (6).

## Revendications

1. Appareil de commande (1) pour la chaîne cinématique d'un véhicule automobile doté d'un moteur (4) et d'une boîte de vitesses automatique (8), ledit appareil de commande comprenant
- une commande de moteur (2) destinée à commander les paramètres qui influent sur le couple moteur, et
- une commande de boîte de vitesses (3) destinée à commander les changements de rapport effectués par la boîte de vitesses automatique (8), et
- une interface (16) reliant entre elles la commande de moteur (2) et la commande de boîte de vitesses (3), ladite interface transmettant un signal d'état (AS), **caractérisé en ce que**
- la commande de boîte de vitesse (6) est informée du fait que le catalyseur se trouve dans une phase de régénération, de sorte que
- dans la commande de boîte de vitesses (6) le changement de rapport par la boîte de vitesses (8) est différé.

2. Appareil de commande selon la revendication 1, **caractérisé en ce que** la commande de boîte de vitesses (6) est informée, par l'intermédiaire du signal d'état (AS), que le moteur (4) se trouve dans une phase d'échauffement.

3. Appareil de commande pour chaîne cinématique selon la revendication 1, **caractérisé en ce qu'**à la réception du signal d'état (AS), un changement de vitesse allant vers un rapport plus élevé est différé dans la commande de boîte de vitesses (3).

4. Appareil de commande pour chaîne cinématique selon la revendication 1, **caractérisé en ce que** la commande de boîte de vitesses (3) présente une table caractéristique spéciale (19) à l'aide de laquelle sont commandés les changements de vitesse différés.

5. Appareil de commande pour chaîne cinématique selon la revendication 1, **caractérisé en ce que** la commande de moteur (2) transmet un signal d'état (AS) à la commande de boîte de vitesses (6) afin de signaler que le moteur (4) fonctionne à charge stratifiée.

6. Appareil de commande pour chaîne cinématique selon la revendication 1, **caractérisé en ce que** la commande de moteur (2) transmet un signal d'état (AS) à la commande de boîte de vitesses (6) afin de lui signaler un changement d'état du moteur (4).
